# EUROPEAN PATENT SPECIFICATION

(11) **EP 2 027 767 B1**
(45) Date of publication and mention of the grant of the patent: **30.11.2011**
(21) Application number: 07114800.1
(22) Date of filing: 22.08.2007
(51) Int. Cl.: A01G 3/037, A01G 3/053, A01G 3/06, B26B 15/00

(54) **Cutting apparatus**
Schneidgerät
Appareil de découpage

(43) Date of publication of application: 25.02.2009
(73) Proprietor: ROBERT BOSCH GMBH, 70442 Stuttgart (DE)
(72) Inventor: Levai, Csaba, H3532, Miskolc (HU)

(56) References cited:
- FR-A- 2 628 935
- FR-A- 2 838 998
- GB-A- 1 427 465
- JP-A- 2005 269 972
- US-A- 5 867 909

## Description

The present invention relates to cutting apparatus. In particular, it relates to control systems for vegetation cutters especially hedge cutters or trimmers.

FR-A-2 628 935 discloses a cutting apparatus comprising a blade movable between two predefined points of maximum travel; a prime mover adapted to drive said blade between said points of maximum travel; and a control means which causes a change of direction in the movement of the blade at a point intermediate the points of maximum travel in response to an event sensed by the control means and which limits the number of changes of direction and disables movement of the blade when said limit is reached.

Hedgecutters comprise two elongate blades which reciprocate with respect to each other. Either one blade is fixed and the other caused to reciprocate or both blades caused to reciprocate in an equal and opposite manner. The blades are driven by means of a cam element driven by the output shaft of an electric motor or small engine. One such cutter is described in JP2005269972, which hedge cutter also includes a switch allowing the user to reverse the direction of motion of one of the blades.

Hedgecutters frequently suffer in use from a problem or blocked cutting blades when they encounter a twig or branch whose size or density exceeds the capacity of the blades or a wire causing the movable blade or blades to still. The operator typically removes the power to the blades to remove the pressure of the moving blade on the branch and then attempts to remove the branch by pulling the branch. This can give rise to substantial safety considerations as the user places their fingers near to the blades. Similar problems are prevented with other cutting tools.

In our earlier application EP07104129.7, filed on 14 March 2007, we describe a cutting apparatus such as a hedgecutter or trimmer having at least one driven blade movable between two predefined points of maximum travel, the apparatus further comprising a prime mover, suitably an electric motor, adapted to cause movement of the said at least one movable blade between said points of maximum travel. The cutting apparatus is characterised in that it is further provided with a control means, suitably in the form of a control circuit, which causes a change of direction in the movement of the at least one movable blade at a point intermediate the points of maximum travel in response to an event sensed by the control means.

Suitably, the change of direction is achieved by a change in the direction of motor rotation.

In one embodiment, the event is an increase in cutting load. Suitably the control circuit includes a current sensing circuit such that, when the current drawn by the motor exceeds a predetermined level, the control circuit reverses the direction of rotation of the motor. Alternatively, the control circuit includes a speed sensor, adapted to sense when the speed of the driven blade falls below a predetermined level.

In an alternative embodiment, the event is removal of power to the driven blade. Suitably, the control circuit is adapted to cause rotation of the motor sequentially in a first direction upon a first application of electrical power to the motor and in a second direction upon a subsequent application of electrical power to the motor.

In a further embodiment the control circuit is adapted to operate the motor in the reverse direction for a predetermined period whereupon the circuit then causes operation of the motor in the normal direction. Suitably, the predetermined period is less than 1 second, more suitably less than half a second, even more suitably from 200 ms to 400 ms.

We now seek to develop this invention further. Even upon reversal of the direction of movement of the at least one movable blade, the cause of the blocking of the blades may not be cleared. Accordingly, preferably, the control means senses continued blocking as a sequence of further events and repeatedly changes the direction of movement of the at least one moveable blade. However, to prevent continuous and indefinite reversal, in accordance with the present invention, the control means is adapted to limit the number of changes of direction and disable movement of the at least one movable blade when said limit is reached.

That is to say, the present invention provides a cutting apparatus as defined in claim 1.

The control means is further adapted, immediately prior to said disabling of said movement of said at least one movable blade, to apply a brief reversed movement to the blade.

Preferably, said brief reversed movement is for a period of up to 500 milliseconds; more preferably up to 250 milliseconds; most preferably from 10 to 100 milliseconds.

Preferably, said brief reversed movement of the blade is arranged to be at a lower speed or power than a normal operating speed or power.

Preferably, the prime mover is an electric motor. More preferably, the change of direction is achieved by a change in the direction of motor rotation.

Preferably, the control means comprises a control circuit.

Suitably the control means limits the number of changes of direction over a predefined period of time. Preferably, the predefined period is about 5 seconds, more preferably from 3 to 5 seconds.

Alternatively, the control circuit monitors the speed of the at least one blade and disables movement if the speed does not reach a prescribed level (typically a normal operating speed) within a specified number of reversals or changes of direction. Typically the number is 10 to 20 reversals.

In one embodiment, the event is an increase in cutting load. Suitably the control circuit includes a current sensing circuit such that, when the current drawn by the motor exceeds a predetermined level, the control circuit reverses the direction of rotation of the motor. Alternatively, the control circuit includes a speed sensor, adapted to sense when the speed of the driven blade falls below a predetermined level.

In an alternative embodiment, the event is removal of power to the driven blade. Suitably, the control circuit is adapted to cause rotation of the motor sequentially in a first direction upon a first application of electrical power to the motor and in a second direction upon a subsequent application of electrical power to the motor.

In one embodiment the control circuit is adapted to operate the motor in the reverse direction for a predetermined period whereupon the circuit then causes operation of the motor in the normal direction. Suitably, the predetermined period is less than 1 second, more suitably less than half a second, even more suitably from 200 ms to 400 ms.

Preferably, the cutting tool is a portable tool. More preferably, the cutting tool is a vegetation cutter, most preferably a hedge cutter or hedge trimmer.

Preferably, the cutting tool comprises an electric motor powered by means of a rechargeable battery or cell. More preferably, the battery is a lithium ion battery.

The above and other aspects of the present invention will now be described in further detail, by way of example only with reference to the accompanying figures in which:

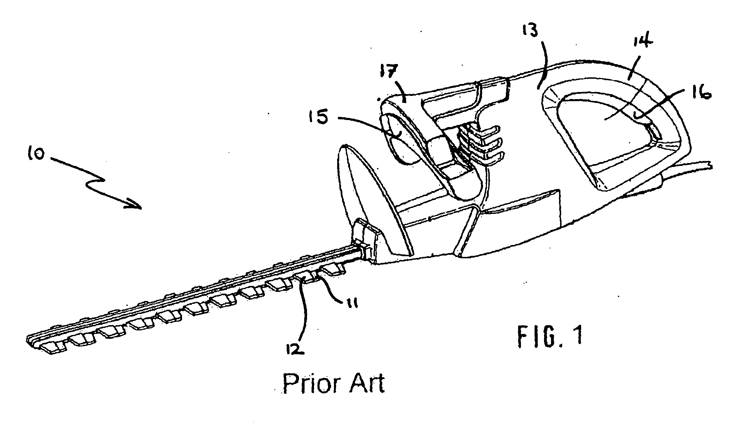

- Figure 1: is a perspective view of typical prior art hedgecutter; and
- Figure 2: is a plot showing, schematically, blade speed against time in a cutting apparatus in accordance with the present invention.

A typical cutting apparatus in accordance with the present invention is in the form of a an electric hedgecutter 10 having a bottom blade 11 and upper blade 12 caused to reciprocate simultaneously and in an equal and opposite manner with respect to the housing and hence also to each other by means of an electric motor housed in a housing unit 13. The housing unit 13 includes two grips 14,15, each associated with a switch arrangement 16,17. This switching configuration provides a safety feature requiring both left and right hands of the operator to be in position and actuating their respective switches in order to supply an electric current to the motor. Accordingly, the blades cannot be put into an operating configuration unless both hands are away from the blades.

The motor acts to reciprocate the moving blades 11, 12 in a conventional manner through suitable gearing as required.

In accordance with the present invention, it is possible to drive the reciprocating blade 11 in a reverse direction, compared with its normal cutting direction. It will be appreciated that, in the context of a reciprocating action, the term 'reverse' is used in a relative sense rather than an absolute sense. In use, a hedgecutter frequently suffers from jamming when it encounters a branch or twig whose diameter or density exceeds the capacity of the blades. This jamming or blocking is overcome by a hedgecutter in accordance with the present invention in one of two ways.

In one arrangement, the reciprocating blade is caused to reverse direction for a brief period, sufficient to release the jammed branch, before resuming its conventional direction automatically, without the operator releasing the switches.

In preferred arrangements, the reciprocating blade is caused to reverse its direction and maintain the reversed direction until such time as a further jammed situation is detected, whereupon the direction is reversed again, to the original direction, and so on automatically, without the operator releasing the switches. With this arrangement, upon encountering a jammed or stalled situation, the blade is caused to oscillate back and forth, thereby cutting the branch from both sides and achieving a cut which would not otherwise have been possible with the hedgecutter. Accordingly, the present invention not only provides a solution to the problem of stalled blades due to jamming but also extends the cutting capability of the cutting tool.

However, to avoid potential damage to the moving components of the apparatus mechanism, in accordance with the present invention, the control means limits the number of changes of direction and disables the movement of the blade once that limit has been reached. Typically, this is achieved by removal of electrical power to the motor.

In one arrangement, the control means disables movement of the blade if a predetermined number of changes of direction are not achieved within a predetermined period of time. Suitably, the period is from two seconds upwards. The upper limit will be governed principally by the life and the limits of the mechanical stresses endurable by the components of the apparatus. Typically, a period of ten seconds is a suitable upper limit. More typically, the period of time is from two to five seconds. Suitably, the number of changes of direction is from 5 to 30, preferably from 10 up to about 20.

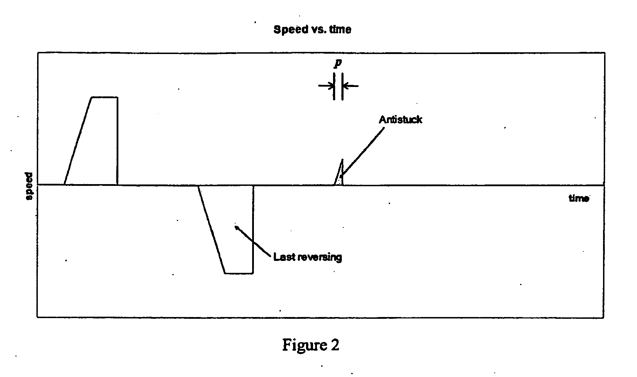

However, when the motor finally stops, it may well be in the closed position, with the object causing the blocking stuck between the blades. Accordingly, in preferred embodiments, the present invention provides an 'antistuck' feature. As illustrated in Figure 2, after the limit has been reached, but before power to the motor is removed, a brief reverse movement is applied to the blade. The brief movement is applied for a short period p such that the blade does not reach its maximum normal speed, but perhaps just ¼ to ½ of it. A period of 10 to 100 milliseconds has been found to be particularly suitable. This allows the blades to move by less than one complete oscillation thus improving the possibility of releasing the blocking condition.

Once this final 'antistuck' reversal has been completed, the apparatus must be restarted in the conventional manner by means of release of the operating hand-switches 16, 17 and then their reapplication.

As described in our earlier application, where the apparatus has an AC motor with armature and brushes having zero commutator/brush shift, reverse rotation is achieved by reversing the direction of current through armature by means of a double pole changeover relay or by means of a 4-triac bridge. Relay changeover state can be changed by means of further electronic control circuitry, the precise configuration of which would be readily apparent to the person skilled in the art.

In the case of an AC motor having commutator/brush shift in addition to the electrical switchover, the brushes are mechanically moved, suitably by means of an electromechanical switching arrangement, thereby replicating the commuter/brush shift for the alternative direction of running.

In a DC motor powered vegetation cutter, suitably zero brush shift is incorporated. Reverse action of the motor, and thus reciprocating blade 12, is achieved by reversal of the motor polarity achievable with solid state or electro-mechanical switching.

In a preferred embodiment, the vegetation cutter is battery-powered, more preferably by means of a Li-ion battery unit. Devices using Li-ion batteries typically include an undervoltage protection circuit. This can be adapted to include the control circuit for the reverse drive operation of the present invention, for example, change of motor direction can be readily accomplished by means of a MOSFET bridge. If a brushless DC motor is utilised, the commutation electronics can advantageously be programmed to reverse the motor direction.

The blade reversal event is advantageously triggered by detection of an increase in or high values of cutting load. In preferred embodiments, the control circuit includes a current sensing circuit for this purpose, adapted to initiate motor reverse when the current drawn by the motor exceeds a predetermined level. Typically, this would be the value at stall, although a value less than stall can be used such that the motor is not permitted to reach a stall condition. Accordingly, the battery charge is prolonged as it is not permitted to supply a full stall current, acting as further protection, in addition to the normal protection, to prevent abuse from overcurrent.

Alternatively, blade reversal can be triggered on each occasion electrical power is applied to the motor. When the motor is re-energised in a stall situation, the reciprocating blade(s) therefore reverses to clear the stall.

As will be apparent, we have discussed two solutions to the same technical problem of blade jamming in hedgecutters and other vegetation cutting apparatus. In one arrangement, when a jammed or stalled situation is sensed, the powered cutter blade is automatically put into reverse to free the vegetation causing the stall. In the second arrangement, it is recognized that the user will typically recognize a jammed or stalled situation and will instinctively release some or both switches and so cut power to the motor. This leaves the cutter in the jammed configuration. Accordingly, the blade is put into a reverse direction automatically on re-application of power to the motor.

## Claims

1. A cutting apparatus (10) having at least one reciprocatable blade (11,12) movable between two predefined points of maximum travel, the apparatus (10) further comprising a prime mover adapted to drive said at least one reciprocatable blade (11,12) between said points of maximum travel; wherein the cutting apparatus (10) is further provided with a control means which causes a change of direction in the movement of the at least one reciprocatable blade (11,12) at a point intermediate the points of maximum travel in response to an event sensed by the control means; wherein the control means limits the number of changes of direction and disables movement of the at least one reciprocatable blade when said limit is reached and wherein the control means is further adapted, immediately prior to said disabling of said output power, to apply a reversed movement to the blade for a brief period *p*.

2. A cutting apparatus as claimed in Claim 1 wherein period *p* is up to 500 milliseconds; preferably up to 250 milliseconds; more preferably from 10 to 100 milliseconds.

3. A cutting apparatus (10) as claimed in any one of Claims 1 to 2 wherein the prime mover is an electric motor.

4. A cutting apparatus (10) as claimed in Claim 3 wherein the change of direction is achieved by a change in the direction of motor rotation.

5. A cutting apparatus (10) as claimed in any one of Claims 1 to 4 wherein the control means comprises a control circuit.

6. A cutting apparatus (10) as claimed in any one of claims 1 to 5 wherein the control means disables movement of the at least one reciprocatable blade if a predetermined number of changes of direction are not achieved within in a predefined period of time.

7. A cutting apparatus (10) as claimed in Claim 5 wherein the event is an increase in cutting load.

8. A cutting apparatus (10) as claimed in Claim 7 wherein the control circuit includes a current sensing circuit such that, when the current drawn by the motor exceeds a predetermined level, the control circuit reverses the direction of rotation of the motor.

9. A cutting apparatus (10) as claimed in Claim 7 wherein control means includes a speed sensor, adapted to sense when the speed of the driven blade falls below a predetermined level.

10. An apparatus as claimed in Claim 9 wherein the control means disables movement of the at least one reciprocatable blade if the speed of said blade as sensed by the speed sensor fails to reach a prescribed level within a specified number of changes of direction.

11. An apparatus as claimed in Claim 10 wherein the prescribed level is the normal operating speed.

12. A cutting apparatus (10) as claimed in Claim 5 wherein the event is removal of power to the driven blade.

13. A cutting apparatus (10) as claimed in Claim 12 wherein the control circuit is adapted to cause rotation of the motor sequentially in a first direction upon a first application of electrical power to the motor and in a second direction upon a subsequent application of electrical power to the motor.

14. A cutting apparatus (10) as claimed in any preceding claim in the form of a vegetation cutter, preferably a hedge cutter or hedge trimmer.

## Patentansprüche

1. Schneidgerät (10), das mindestens ein hin und her bewegliches Messer (11, 12) umfasst, das zwischen zwei vordefinierten Maximalhubpunkten beweglich ist, wobei das Gerät (10) weiterhin ein Antriebsaggregat umfasst, das zum Antrieb des mindestens einen hin und her beweglichen Messers (11, 12) zwischen den Maximalhubpunkten ausgeführt ist; wobei das Schneidgerät (10) weiterhin ein Steuermittel umfasst, das eine Richtungsänderung der Bewegung des mindestens einen hin und her beweglichen Messers (11, 12) an einem Punkt zwischen den Maximalhubpunkten als Reaktion auf ein von dem Steuermittel erfasstes Ereignis bewirkt; wobei das Steuermittel die Anzahl von Richtungsänderungen begrenzt und eine Bewegung des mindestens einen hin und her beweglichen Messers blockiert, wenn die Grenze erreicht ist, und wobei das Steuermittel weiterhin dazu ausgeführt ist, unmittelbar vor dem Blockieren der Ausgangsleistung das Messer für eine kurze Zeitdauer p mit einer Rückwärtsbewegung zu beaufschlagen.

2. Schneidgerät nach Anspruch 1, wobei die Zeitdauer p bis zu 500 Millisekunden, vorzugsweise bis zu 250 Millisekunden, besonders bevorzugt von 10 bis 100 Millisekunden, beträgt.

3. Schneidgerät (10) nach einem der Ansprüche 1 bis 2, wobei das Antriebsaggregat ein Elektromotor ist.

4. Schneidgerät (10) nach Anspruch 3, wobei die Richtungsänderung durch eine Änderung der Motordrehrichtung erreicht wird.

5. Schneidgerät (10) nach einem der Ansprüche 1 bis 4, wobei das Steuermittel eine Steuerschaltung umfasst.

6. Schneidgerät (10) nach einem der Ansprüche 1 bis 5, wobei das Steuermittel eine Bewegung des mindestens einen hin und her beweglichen Messers blockiert, wenn eine vorbestimmte Anzahl von Richtungsänderungen nicht innerhalb einer vordefinierten Zeitdauer erreicht wird.

7. Schneidgerät (10) nach Anspruch 5, wobei das Ereignis eine Zunahme der Schneidlast ist.

8. Schneidgerät (10) nach Anspruch 7, wobei die Steuerschaltung eine Strommessschaltung enthält, so dass, wenn der von dem Motor abgezogene Strom eine vorbestimmte Höhe überschreitet, die Steuerschaltung die Drehrichtung des Motors umkehrt.

9. Schneidgerät (10) nach Anspruch 7, wobei das Steuermittel einen Geschwindigkeitssensor enthält, der dazu ausgeführt ist zu erfassen, wann die Geschwindigkeit des angetriebenen Messers unter eine vorbestimmte Höhe fällt.

10. Gerät nach Anspruch 9, wobei die Steuerschaltung eine Bewegung des mindestens einen hin und her beweglichen Messers blockiert, wenn die von dem Geschwindigkeitssensor erfasste Geschwindigkeit des Messers nicht innerhalb einer bestimmten Anzahl von Richtungsänderungen eine festgelegte Höhe erreicht.

11. Gerät nach Anspruch 10, wobei die festgelegte Höhe die normale Betriebsgeschwindigkeit ist.

12. Schneidgerät (10) nach Anspruch 5, wobei das Ereignis die Unterbrechung der Energiezufuhr zu dem angetriebenen Messer ist.

13. Schneidgerät (10) nach Anspruch 12, wobei die Steuerschaltung dazu ausgeführt ist, eine Drehung des Motors sequentiell in einer ersten Richtung bei einer ersten Zuführung von elektrischer Energie zu dem Motor und in einer zweiten Richtung bei einer anschließenden Zuführung von elektrischer Energie zu dem Motor zu bewirken.

14. Schneidgerät (10) nach einem vorhergehenden Anspruch in Form einer Pflanzenschneidvorrichtung, vorzugsweise eines Heckenschneiders oder einer Heckenschere.

## Revendications

1. Appareil de découpage (10) ayant au moins une lame (11, 12) pouvant aller et venir, déplaçable entre deux points de course maximale prédéfinis, l'appareil (10) comprenant en outre un moteur d'entraînement prévu pour entraîner ladite au moins une lame (11, 12) pouvant aller et venir entre lesdits points de course maximale ; l'appareil de découpage (10) étant en outre pourvu d'un moyen de commande qui provoque un changement de direction dans le mouvement de l'au moins une lame (11, 12) pouvant aller et venir en un point entre les points de course maximale en réponse à un événement détecté par le moyen de commande ; le moyen de commande limitant le nombre de changements de direction et désactivant le mouvement de l'au moins une lame pouvant aller et venir lorsque ladite limite est atteinte et le moyen de commande étant en outre adapté, immédiatement avant ladite désactivation de ladite puissance de sortie, pour appliquer un mouvement inverse à la lame pendant une brève période p.

2. Appareil de découpage selon la revendication 1, dans lequel la période p dure jusqu'à 500 millisecondes ; de préférence jusqu'à 250 millisecondes ; et plus préférablement de 10 à 100 millisecondes.

3. Appareil de découpage (10) selon l'une quelconque des revendications 1 à 2, dans lequel le moteur d'entraînement est un moteur électrique.

4. Appareil de découpage (10) selon la revendication 3, dans lequel le changement de direction est réalisé par un changement du sens de rotation du moteur.

5. Appareil de découpage (10) selon l'une quelconque des revendications 1 à 4, dans lequel le moyen de commande comprend un circuit de commande.

6. Appareil de découpage (10) selon l'une quelconque des revendications 1 à 5, dans lequel le moyen de commande désactive le mouvement de l'au moins une lame pouvant aller et venir si un nombre de changements de direction prédéterminé n'est pas réalisé au cours d'une période de temps prédéterminée.

7. Appareil de découpage (10) selon la revendication 5, dans lequel l'événement est une augmentation de la charge de découpage.

8. Appareil de découpage (10) selon la revendication 7, dans lequel le circuit de commande comporte un circuit de détection de courant tel que lorsque le courant consommé par le moteur dépasse un niveau prédéterminé, le circuit de commande inverse le sens de rotation du moteur.

9. Appareil de découpage (10) selon la revendication 7, dans lequel le moyen de commande comporte un capteur de vitesse, prévu pour détecter quand la vitesse de la lame entraînée chute en dessous d'un niveau prédéterminé.

10. Appareil selon la revendication 9, dans lequel le moyen de commande désactive le mouvement de l'au moins une lame pouvant aller et venir si la vitesse de ladite lame telle que détectée par le capteur de vitesse n'atteint pas un niveau prescrit en l'espace d'un nombre de changements de direction spécifié.

11. Appareil selon la revendication 10, dans lequel le niveau prescrit est la vitesse de fonctionnement normale.

12. Appareil de découpage (10) selon la revendication 5, dans lequel l'événement est la coupure de la puissance alimentée à la lame entraînée.

13. Appareil de découpage (10) selon la revendication 12, dans lequel le circuit de commande est prévu pour provoquer la rotation du moteur séquentiellement dans une première direction lors d'une première application de puissance électrique au moteur et dans une deuxième direction lors d'une application subséquente de puissance électrique au moteur.

14. Appareil de découpage (10) selon l'une quelconque des revendications précédentes, sous la forme d'un instrument pour couper de la végétation, de préférence un coupe-haie ou un taille-haie.
